Europäisches Patentamt

European Patent Office

Office européen des brevets

(11) Publication number: **0 241 934**
**A2**

## EUROPEAN PATENT APPLICATION

(21) Application number: 87105673.5

(22) Date of filing: 16.04.87

(51) Int. Cl.⁴ **G11B 9/00 , //G11B9/10**

(30) Priority: 18.04.86 JP 87911/86

(43) Date of publication of application:
21.10.87 Bulletin 87/43

(84) Designated Contracting States:
DE GB

(71) Applicant: HITACHI, LTD.
6, Kanda Surugadai 4-chome Chiyoda-ku
Tokyo 100(JP)

(72) Inventor: Aida, Toshiyuki
4-25-7, Kokuryo-cho
Chofu-shi Tokyo(JP)
Inventor: Hosoki, Shigeyuki
2-17-24, Nanyoudai
Hachiohi-shi Tokyo(JP)
Inventor: Ishitani, Tohru
Seibu Sayamadai Haitsu R304 1354-56,
Irumugawa
Sayama-shi Saitama-ken(JP)
Inventor: Hosaka, Sumio
2196-657, Hirai Hinodemachi
Nishistama-gun Tokyo(JP)

(74) Representative: Patentanwälte Beetz sen. -
Beetz jun. Timpe - Siegfried -
Schmitt-Fumian
Steinsdorfstrasse 10
D-8000 München 22(DE)

(54) Ultrahigh-density recording system utilizing focused beam.

(57) The present invention relates to a recoring system used to record information with an ion beam and read the recorded information with an electron beam, and the specification discloses an ultrahigh-density recording system utilizing a focused beam, comprising the steps of arranging a focused beam generating source (1) in opposition to a recording medium (8), and applying a focused ion beam from the focused beam generating source (1) to the recording medium (8) in accordance with digital information while varying the relative position of the recording medium and focused beam generating source, to thereby record information on the recording medium; and then applying a weak focused beam from the focused beam generating source to the recording medium while varying the relative position of the recording medium and focused beam -generating source, to thereby vary the secondary electrons, fluorescent X-rays of an absorption current, which is generated in the recording medium, and reproduce the information.

FIG. 1

# ULTRAHIGH-DENSITY RECORDING SYSTEM UTILIZING FOCUSED BEAM

Background of the Invention:

This invention relates to a recording system which enables the ultrahigh-density recording of information.

A magnetic disc and an optical disc device are known as devices for recording and reproducing information of electric pulse signals. The increasing the density of these recording media has been studied. However, it is said that a limit cell size per bit of both of these recording media is around 1 $\mu m^2$. This is equal to about $10^8$ bits/cm² in terms of recording density. In recent years, a higher-density recording apparatus has been required for storing a large quantity of information. A focused beam-applied writing and reading apparatus is capable of reducing a required cell size per bit to around 0.05 x 0.05 $\mu m^2$.

Regarding this matter, researches in a file using an electron beam were conducted energetically by the General Electric Company in U. S. A. in the latter half of 1970's. As shown in R&D, Review, (1977) p.12-15, the General Electric Company developed a system for writing, reading and erasing information in and from a MOS memory with an electron beam. This system has a high transfer rate and a high access rate but it has a low memory capacity. Therefore, this system has not been used for files in practice. In recent years, in which the necessity of recording a large quantity of information has further increased, the electron-beam recording has begun again to attract the attention of those skilled in the art as shown in Japanese Patent Laid-Open Nos. 221846/1984 and 221847/1984. In both of the systems disclosed in these publications, the electron gun is fixedly provided, and a generated electron beam is deflected in a magnetic field or an electric field and applied to the upper surface of a disc. If a 0.1 $\mu m$ focused beam is used in any of these systems, the radiation area is limited to around 2 mm². If the radiation area is larger than 2 mm², the diameter of the beam is increased greatly. This causes a large problem to arise in the use of a focused beam as a probe current for an ultrahigh-density file.

Summary of the Invention:

An object of the present invention is to provide a recording system capable of preventing an increase in the diameter of a beam, which constitutes a problem in a prior art system of this kind, and increasing the recording capacity.

This and other objects of the present invention can be achieved by an ultrahigh-density recording system utilizing a focused beam, comprising the steps of arranging a focused beam generating source in opposition to a recording medium, and applying a focused electron beam or a focused ion beam from the focused beam generating source to the recording medium in accordance with the digital information while varying the relative position of the recording medium and focused beam generating source, to thereby record information on the recording medium; and then applying a weak focused electron beam from the focused beam generating source to the recording medium while varying the relative position of the recording medium and focused beam generating source, to thereby vary the secondary electrons, fluorescent X-rays or an absorption current, which is generated in the recording medium, and reproduce the information.

Brief Description of the Drawings:

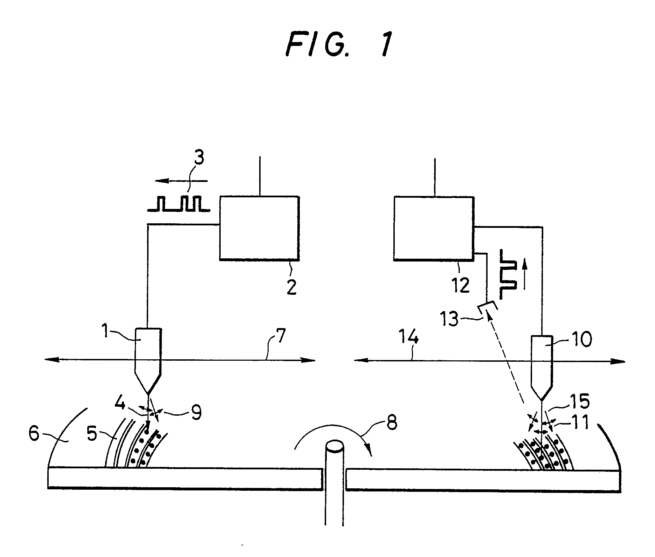

Fig. 1 is a schematic diagram of a model of an embodiment of the ultrahigh-density recording system utilizing a focused beam according to the present invention;

Fig. 2a illustrates the principle of the writing according to the present invention;

Fig. 2b is a sectional view taken along the line A-A′ in Fig. 2a; and

Fig. 3 illustrates the principle of an example of a reading operation according to the present invention.

Description of the Preferred Embodiments:

The consumption of an electric current of an ion beam and that of an electron beam are equal but the quantity of energy obtained from the former is larger than that obtained from the latter. Accordingly, the ion-beam recording enables the writing with a smaller output as compared with the electron-beam writing, and an ultrahigh density recording apparatus to be miniaturized.

In the ion-beam recording, a liquid metal having a low metal point is used in most cases as a material for an ion beam, and a high read sensitivity can be obtained since the material constituting the surface of the substrate of the recording medium and that constituting the dots recorded by using the material referred to above are different from each other.

In the system according to the present invention, the disc mounted on the recording medium consists of a rotary disc, and the focused beam generating source for reading and writing operations is moved on the disc, both the reading and writing being done with a predetermined level of electric current by utilizing the beam-deflecting techniques.

When the system according to the present invention is used, the reading and writing focused beam enters the disc perpendicularly, and an increase in the diameter of the beam can be prevented, so that an ultrahigh-density file can be obtained. Since the disc mounted on the recording medium consists of a rotating disc with the corpuscular beam source moved on the disc, a large recording area can be obtained. This enables the recording capacity to increase.

The embodiments of the ultrahigh-density recording system utilizing a focused beam according to the present invention will now be described.

Embodiment 1:

Writing System:

The writing was done by using a focused ion beam source 1 which contained a liquid metal of a low melting point, such as Sn and Pb, and which is formed so as to take out ions from an emitter, which consists of a material of a high melting point, by the electric field ionization. Dots were formed with ion beams 4 of Sn or Pb correspondingly to a digital information signal 3 outputted from an information signal processor 2. The ion beam was focused to 0.1 $\mu$m and applied to a 6-inch Si plate 6 in which track grooves 5 had been formed at intervals of 0.2 $\mu$m in advance. The application of ions to the whole surface of the disc was carried out by utilizing a system in which the ion beam source is moved 7 in the radial direction with the disc turned 8. Mechanically accessing the ion beam to a 0.2 $\mu$m position causes an error easily. Therefore, the electron gun deflection techniques 9 were used for accessing the ion beam to a position for not more than 10$\mu$m. The techniques for finely moving the ion source by a piezoelectric chip or an electro-strictive chip may be used for this purpose.

As a result, the writing of 0.1 $\mu$m dots in 0.2 $\mu$m groove could be done, and the high-density recording of $10^{10}$ bits/cm² could be achieved. The writing may also be done by using a focused electron beam besides a focused ion beam. However, when a focused electron beam is used, the depositing and implanting of a substance cannot be done unlike the case where a focused ion beam is used. Therefore, in such a case, it was necessary to utilize the thermal phase change of the electron beam resist applied to the upper surface of the disc, which occurred when the electron beam was applied to the resist.

Reading System:

The reading was done by using an electron beam source provided with an field emission type cathode. A low level of electric current 11 of around nA was focused to 0.1 $\mu$m and applied to a predetermined track on the disc. The information was read 12 by determining a difference between the secondary electrons and fluorescent X-rays 13 occuring in the dots of Pb or Sn and those occurring in the Si substrate. The reading may also be done by using an absorption current. The application of the electron beam to the whole surface of the disc could be done in the same manner as in the writing system by moving 14 the electron beam source in the radial direction, rotating 8 the disc, deflecting the beam within a certain region, or employing a method 15 of moving the beam finely by a piezoelectric chip. Thus, the reading of the 0.1 $\mu$m dots in the 0.2 $\mu$m wide track was done.

In the above writing and reading operations, two corpuscular beam sources were used. When an electron beam alone is used, only one corpuscular beam source may naturally be employed. In this case, the writing and reading of information can be done by merely varying the amperage of the electron beam.

Embodiment 2:

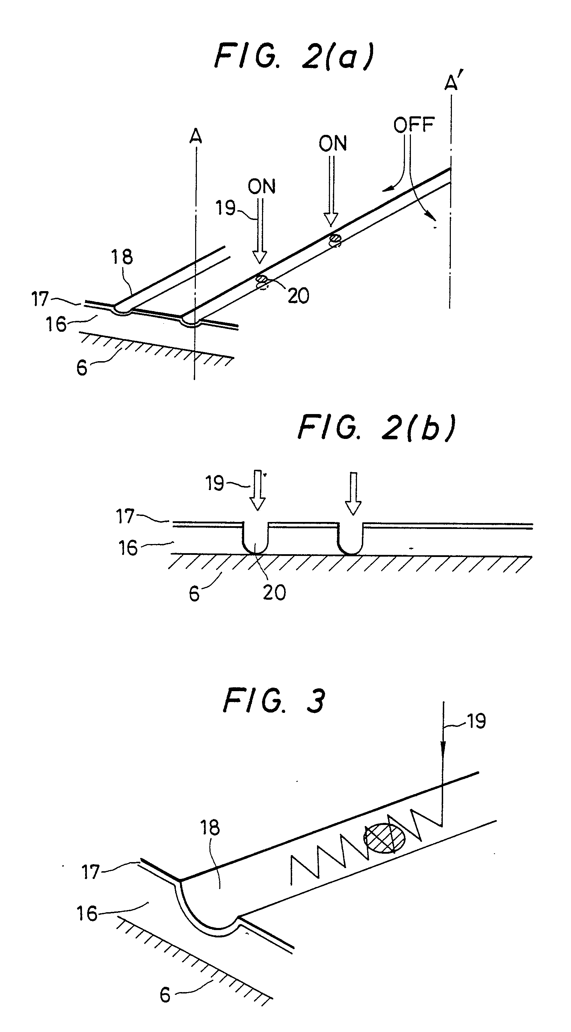

Fig. 2a shows a recording medium having an about 0.1 $\mu$m thick nitrocellulose film 16 formed on a Si disc 6 by a spinner coating method, and a 20 nm Au film 17 formed on the film 16. A track 18 of 60 nm in depth and 200 nm in width was formed by a regular electron beam drawing exposure method. When a focused electron beam 19 having an acceleration voltage of 10 kV, an amperage of 2 $\mu$A and a beam diameter of 0.1 $\mu$m was applied to this medium, a small bore 20 shown in Fig. 2b could be formed. The bore 20 was made due to the explosive loss of the part of the nitrocellulose layer which was heated with the beam. However, when a beam is applied to the interior of the track even in a medium having no information therein, a plurality of small, unnecessary bores are formed. This problem could be solved by deflecting the beam, when the medium had no information, to the outside of the track as shown in Fig. 2a, so as to reduce the quantity of beam applied to the interior of the track, to an extremely low level. This method can be applied effectively not only to the radiation of an electron beam but also to the radiation of a focused ion beam referred in Embodiment 1.

Embodiment 3:

Fig. 3 illustrates the reading of dots recorded in Embodiment 2. An electron beam having an acceleration voltage of 1 kV, an amperage of 1 nA and a diameter of 0.05 $\mu$m was used. In this case, the radiation input was as low as $10^{-6}$ W, so that the nitrocellulose in the medium was not heated. It is necessary to track the electron beam so that the beam does not move out of the track. Therefore, the techniques for detecting the variation of the current based on the depth of the track, at both sides of the interior of the track, and deflecting the beam at a high frequency of not lower than MHz were employed. Consequently, the electron beam moved zigzag to thereby enable the automatic tracking of the beam.

In contrast to a conventional electron beam file obtained by employing the electron beam deflecting techniques with the disc fixed, the present invention is capable of easily addressing a focused beam of around 0.1 $\mu$m in a track of a width of not more than 0.2 $\mu$m, and does not have a limit to the area of the disc. Therefore, the capacity of a $10^{13}$ bits/6 inch disc having a recording density of as high as $10^{10}$ bits/cm².

## Claims

1. An ultrahigh-density recording system utilizing a focused beam, comprising the steps of arranging focused beam generating source (1) in opposition to a recording medium (8), and applying a focused ion beam (4) from said focused beam generating source (1) to said recording medium (8) in accordance with digital information while varying the relative position of said recording medium (8) and said focused beam generating source (1), to thereby record information on said recording medium (8); and then applying a weak focused beam from said focused beam generating source (1) to said recording medium (8) while varying the relative position of said recording medium and said focused beam generating source, to thereby vary the secondary electrons, fluorescent X-rays or an absorption current, which is generated in said recording medium, and reproduce the information.

2. An ultrahigh-density recording system utilizing a focused beam according to Claim 1, wherein said recording medium (8) consists of a disc type material, the varying of the relative position of said recording medium and said focused beam generating source (1) being done by rotating said recording medium while moving said focused beam generating source in the radial direction of said recording medium.

3. An ultrahigh-density recording system utilizing a focused beam according to Claim 1, wherein the recording of information is done by switching an operation for deflecting the focused ion to the outside of a track (5) in said recording medium (8) in accordance with the information to be recorded, and an operation for focusing the same ion beam to the interior of said track (5), to each other suitably.

# FIG. 1

0 241 934

## FIG. 2(a)

## FIG. 2(b)

## FIG. 3